# EUROPEAN PATENT APPLICATION

(11) **EP 4 838 158 A1**
(43) Date of publication of application: **11.11.2026**
(21) Application number: 26175575.5
(22) Date of filing: 29.04.2026
(51) Int. Cl.: F25D 29/00, A23B 7/148, F25D 13/02, G06Q 10/0832, F25D 17/00

(54) **SYSTEM FOR EVALUATING COOLING QUALITY AND THE CONTENT OF A TEMPERATURE-CONTROLLED ROOM**

(30) Priority: 06.05.2025 US 202519200214
(71) Applicant: Storage Control Systems, Inc., Sparta, Michigan 49345 (US)
(72) Inventor: SCHAEFER, James C., Sparta, 49345 (US); SCHAEFER, Madison, Sparta, 49345 (US); VEENSTRA, Zachary, Sparta, 49345 (US)
(74) Representative: Haseltine Lake Kempner LLP

(57) **Abstract**

A system for evaluating cooling quality and ultimately the contents of a temperature-controlled room, the system comprising:
a temperature sensor disposed within the temperature-controlled room, the temperature sensor being configured to periodically measure a temperature within the temperature-controlled room over an evaluation period; and
a communications module configured to transmit temperature data from the temperature sensor to a remote server, the remote server being configured to:
calculate a weighted cooling factor score based on a plurality of temperature-based factors, each temperature-based factor being derived from the temperature data, and
generate an automated notification indicating a recommended corrective action to counteract a reduction in marketability of produce within the temperature-controlled room in response to the weighted cooling factor score being less than a predetermined optimal score.

## Description

### BACKGROUND OF THE INVENTION

Controlled Atmosphere (CA) rooms and Cold Storage (CS) rooms are widely used to prolong the shelf life of perishable commodities, including apples, pears, and other fruits and vegetables. By adjusting oxygen and carbon dioxide levels, as well as temperature and humidity, CA and CS rooms (hereinafter referred to as "temperature-controlled rooms") create optimal conditions to slow ripening and to preserve product quality for extended storage.

Temperature control is one of the most critical parameters in CA and CS storage. Deviations from ideal storage temperatures accelerate spoilage or alter the respiration rate of stored produce, leading to premature ripening, reducing marketability, and increasing weight loss. Maintaining uniform and stable temperatures throughout the room is therefore essential to maximizing storage performance and minimizing waste. Furthermore, some cultivars require stepwise cooling to reduce internal and external disorders.

Conventional systems rely on local sensors, temperature loggers, and periodic manual checks to monitor temperature conditions. These approaches can delay the detection of critical thermal irregularities, due to long sensing intervals, that make it difficult to assess performance trends over time. Additionally, data from individual sensors is often evaluated in isolation, without broader context or actionable insight.

Accordingly, there remains a continued need for improved systems to remotely monitor temperature conditions in temperature-controlled rooms. In particular, there remains a need for systems that sense, record, and report temperature in real time and track cooling intervals to enable earlier intervention, dynamic optimization, and informed decision-making, via an app/website, including the selection of rooms for shipment.

### SUMMARY OF THE INVENTION

A system for monitoring storage conditions in Controlled Atmosphere (CA) or Cold Storage (CS) rooms is provided. The system determines a weighted cooling factor score for comparison against an optimal score based on successive temperature measurements within the temperature-controlled room. The system initiates an alert if the weighted cooling factor score deviates from the optimal score, while potentially recommending corrective actions. The scoring system can also prioritize the contents of temperature-controlled rooms for shipment, potential storage duration, or other disposition, based on a comparison of weighted cooling factor scores from multiple rooms.

In one embodiment, the weighted cooling factor score is the aggregate of multiple temperature-based factors. Each temperature-based factor is assigned a respective weight that reflects its impact on the viability of long-term storage. For example, the temperature-based factors can include temperature range adherence, cooling moderation, average deviation from setpoint, temperature volatility, median cooling amount, and maximum cooling amount.

In some embodiments, the "temperature range adherence" factor evaluates the percentage of time that the temperature-controlled room maintains a temperature within a predefined acceptable range. The "cooling moderation" factor measures the rate of temperature reduction over time. The "average deviation from setpoint" factor reflects the average absolute difference between the measured temperature and a setpoint temperature. The "temperature volatility" factor quantifies the average absolute difference between the temperature and the 12-hour moving average. The "median cooling amount" factor represents the median magnitude of observed cooling events, while the "maximum cooling amount" factor indicates the single largest observed temperature drop during the evaluation period. Each factor is normalized to produce a partial score, which is then multiplied by the respective weight. The sum of all weighted factors yields a composite cooling factor score that is indicative of the thermal performance of the temperature-controlled room or rooms.

In another embodiment, the system includes a sampling enclosure in fluid communication with the temperature-controlled room, the sampling enclosure including a sub-quantity of the produce being stored in the temperature-controlled room. The temperature-controlled room includes at least a temperature sensor outside of the sampling enclosure and a communication module for transmitting temperature measurements to a remote server. The remote server calculates the weighted cooling factor score based, in part, on successive temperature measurements within the temperature-controlled room for comparison with the optimal score. If the weighted cooling factor score deviates from an optimal or earlier score, the server generates an automated alert, optionally with recommended corrective actions. Still further the operator understands and can designate poor rooms for early shipment, particularly if the temperature deviation has accelerated the ripening of the contents of the temperature-controlled room. In another embodiment, the oxygen sensor, the carbon dioxide sensor, and the temperature sensor can be mounted in the temperature-controlled room, offering an alternative method for collecting data.

In these and other embodiments, the system generates automated notifications for the operator of the temperature-controlled room. For example, the notifications can inform the operator that the monitored fruit is unlikely to achieve optimal long-term storage outcomes. This early warning allows the operator to expedite the marketing or distribution of the stored produce earlier than scheduled, thereby reducing weightloss, which in extreme cases means unmarketable fruit due to shrivel. Moreover, the post-harvest care of valuable fruits and vegetables often does not receive the necessary attention. In many cases, growers prioritize the harvesting process over the management of the commodity once it is in storage. The demands of daily operations and various distractions faced by both owners and employees can result in insufficient monitoring and care of stored produce. One or more embodiments of one or more aspects of the present invention may address these critical issues by providing real-time data on environmental conditions with temperature-controlled rooms, alerting users to potential problems that require immediate attention. This capability adds significant value by enhancing the preservation of the harvested produce, ultimately increasing the yield and quality of the crop.

One or more embodiments of one or more aspects of the present invention may include automated reporting and monitoring, including reports that provide insights into the initial storage conditions of produce, offering both real-time visibility to management, the room's performance and historical comparisons to prior years. One or more embodiments of one or more aspects of the invention may enable tracking of environmental parameters such as oxygen levels, carbon dioxide levels, and temperature during the early period of post-harvest storage. The system supports growers in improving operational efficiency and profitability. It includes a suite of interactive tools that monitor storage conditions as produce progresses through the cold chain. Each type of produce is associated with a specific storage protocol, which can be customized by the user through a system interface. The system also allows users to define these storage protocols and automatically generates alerts when monitored parameters, such as temperature, oxygen, or carbon dioxide levels, deviate from preset thresholds or require scheduled adjustments (e.g., temperature step-down intervals). These proactive notifications help ensure that operators remain engaged with and responsive to the needs of the stored commodities throughout daily operations.

These and other features and advantages of the present invention will become apparent from the following description of the invention, when viewed in accordance with the accompanying drawings and appended claims.

### BRIEF DESCRIPTION OF THE DRAWINGS

Reference will now be made, by way of example only, to the following drawings, in which:
Figure 1 illustrates a system for monitoring the thermal performance of a temperature-controlled room in accordance with one embodiment.
Figure 2 is a table illustrating temperature-based factors for a weighted cooling factor score.
Figure 3 is a graph illustrating a first weighted cooling factor score for a temperature-controlled room over a seven-day storage period.
Figure 4 is a graph illustrating a second weighted cooling factor score for a temperature-controlled room over a seven-day storage period.
Figure 5 is a graph illustrating recommended and measured temperatures for Honeycrisp apples during a thirty-day storage period.
Figure 6 is a graph illustrating recommended and measured oxygen levels for Honeycrisp apples during a thirty-day storage period.
Figure 7 is a graph illustrating recommended and measured carbon dioxide levels for Honeycrisp apples during a thirty-day storage period.

### DETAILED DESCRIPTION OF THE CURRENT EMBODIMENTS

The current embodiments include an improved system for monitoring storage conditions in a temperature-controlled room. The system determines a weighted cooling factor score based on successive temperature measurements. The weighted cooling factor score is the aggregate of multiple temperature-based factors, each being assigned a respective weight. The system can initiate an alert if the weighted cooling factor score deviates from an optimal or earlier score, providing the operator information to designate the order of temperature-controlled rooms for shipment, long-term storage, or other disposition.

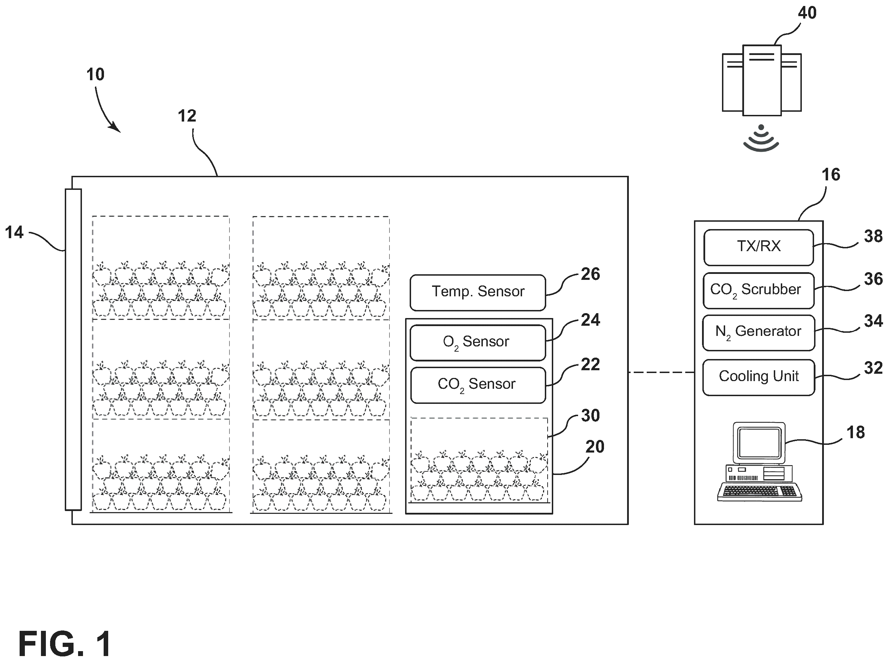

Referring first to Figure 1, a temperature-controlled room is illustrated and generally designated 10. The temperature-controlled room 10 includes a temperature-controlled storage enclosure 12 that is suitable for the storage of bulk produce therein, including apples, pears, and other fruits and vegetables. The temperature-controlled room 10 includes a door 14 to create a hermetic seal. The temperature-controlled room 10 also includes a measurement and control system 16 (hereinafter "control system 16") adapted to control the atmosphere within the enclosure 12. In the illustrated embodiment, the control system 16 is adapted to adjust the partial pressure of oxygen and the partial pressure of carbon dioxide in the temperature-controlled room 10, while also regulating the temperature within the temperature-controlled room 10. The control system 16 is connected to an input/output device, for example a workstation 18. The control system 16 is computer-controlled and includes, for example, the control system disclosed in U.S. Patent 8,551,215 to Schaefer, the contents of which are incorporated by reference in their entirety.

As also depicted in Figure 1, the system includes a sampling enclosure 20. The sampling enclosure 20 is adapted to preview the effects of changes in oxygen levels on respiration and is also adapted to provide more accurate monitoring of the respiration of the sample lot stored therein. The sampling enclosure 20 can be as described in U.S. Patent 8,739,694 to Schaefer, the contents of which are incorporated by reference in their entirety, also available commercially as the SAFEPOD SYSTEM by Storage Control Systems, Inc. of Sparta, Michigan.

The sampling enclosure 20 is coupled to the control system 16 and includes a carbon dioxide sensor 22 and an oxygen sensor 24. The temperature-controlled room 10 also includes a temperature sensor 26, which is located outside of the sampling enclosure 20 (but within the temperature-controlled room) to continuously measure temperature in the temperature-controlled room 10. The sampling enclosure 20 is ordinarily maintained in atmospheric communication with the temperature-controlled room 10 so that the sample lot shares the environmental conditions with the commodities in the temperature-controlled room 10. At select times, the sampling enclosure 20 is isolated from the temperature-controlled room 10 and changes in gas concentration levels are previewed on the sample lot 28. Once testing is completed, the sampling enclosure 20 can be brought into atmospheric communication with the temperature-controlled room 10 in the manner set forth in U.S. Patent 8,739,694 to Schaefer. Though illustrated as being contained within the temperature-controlled room 10, the sampling enclosure 20 may also be positioned external to the temperature-controlled room 10 while remaining in fluid communication with each other.

As also shown in Figure 1, the control system 16 includes a cooling unit 32, a nitrogen generator 34, a carbon dioxide scrubber 36, and a communications module 38. The cooling unit 32 regulates the internal temperature of the storage enclosure 12 (the temperature-controlled room). The nitrogen generator 34 reduces the oxygen concentration as needed, while the carbon dioxide scrubber 36 removes carbon dioxide to maintain a specific level within the storage enclosure 12. The control system 16 is configured to selectively operate each such component 32, 34, 36 to maintain desired atmospheric conditions within the storage enclosure 12. Additional sensors can include a humidity sensor, a pressure sensor, an ethylene sensor, or other gas composition sensors, for example.

In the present embodiment, the temperature-controlled room 10 is one room among a series of rooms of a storage facility. Similar to the temperature-controlled room 10 depicted in Figure 1, the remaining temperature-controlled rooms include a control system 16, a temperature sensor 26, and a sampling enclosure 20, which as noted above may be within or external to the respective temperature-controlled room. In the case of one or more temperature-controlled rooms, the operator receiving the weighted cooling factor score can make decisions to remedy issues mid-season to change/improve the outcome of the product.

As noted above, the system includes a communications module 38. The communications module 38 is configured to transmit temperature measurements to a remote server 40. The communications module 38 can include a wireless transceiver that is operable via Wi-Fi, cellular, Bluetooth, or other wireless or wired protocols. Upon obtaining temperature measurements from the temperature sensor 26, the communications module 38 packages and transmits the temperature data at periodic intervals to the remote server 40, optionally every ten minutes. This transmission enables periodic monitoring and analysis by the remote server 40, thereby facilitating enhanced environmental control and operational oversight. The remote server 40 then calculates a weighted cooling factor score based on a plurality of temperature-derived factors that collectively characterize the thermal performance of the temperature-controlled room 10. Each factor is computed using temperature measurement data collected over a defined evaluation period (e.g., seven days) and is assigned a respective weight (e.g., 10%, 20%, or 25%) that reflects its relevance to the overall thermal health of the stored produce.

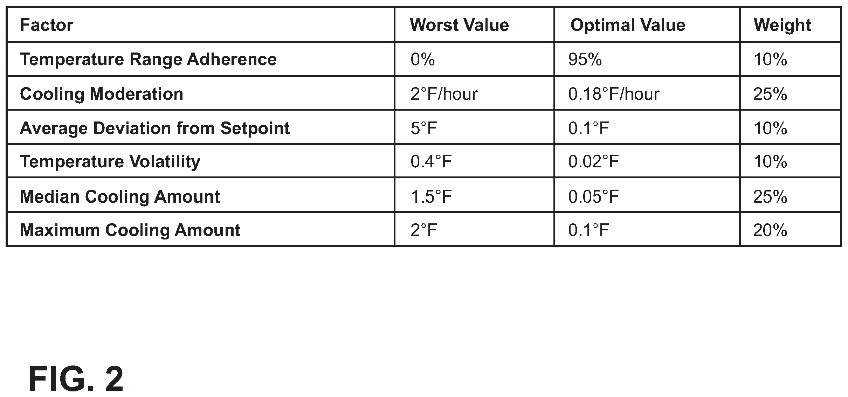

With reference to Figure 2, the temperature-derived factors may include: (i) a 'temperature range adherence' factor indicating the percentage of time the measured temperature remains within a predefined acceptable range; (ii) a 'cooling moderation' factor measuring the average rate of temperature reduction over time; (iii) an 'average deviation from setpoint' factor representing the mean absolute deviation between recorded temperatures and a designated setpoint; (iv) a 'temperature volatility' factor quantifying the mean absolute difference between the temperature and the 12-hour moving average; (v) a 'median cooling amount' factor indicating the median magnitude of observed cooling events; and (vi) a 'maximum cooling amount' factor identifying the single largest observed temperature drop. Each factor is normalized (i.e., scaled into a common range, for example between 0 and 1 or between 0% and 100%), which is then multiplied by its assigned weight. As shown in Figure 2 for example, the normalized 'cooling moderation' factor and the normalized 'median cooling amount' each receive a 25% weight. As also shown in Figure 2, the 'temperature range adherence' factor, the 'average deviation from setpoint' factor, and the 'temperature volatility' factor each receive a 10% weight. The 'maximum cooling amount' factor receives a 20% weight. The weighted partial scores are aggregated by the remote server 40 to produce the final composite cooling factor score, which is used to evaluate the thermal stability of the temperature-controlled room.

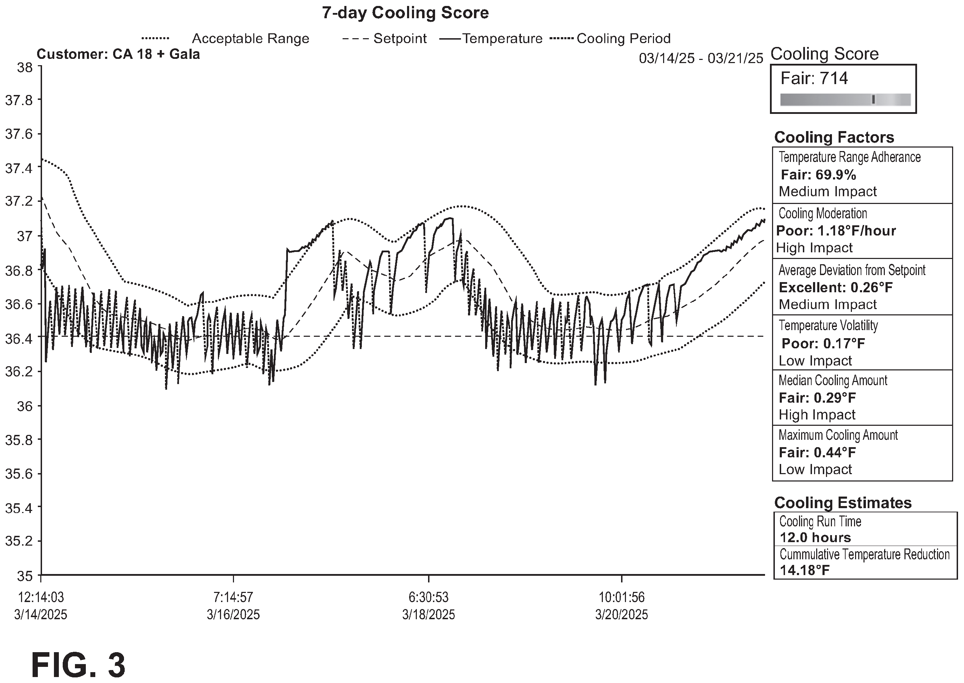

Further by example, a weighted cooling factor score is shown in Figure 3 for a seven-day cooling cycle. In this example the 'temperature range adherence' factor was 69.9%, indicating fair compliance (an optimal value is 95% or more). The 'cooling moderation factor' was 1.18°F/hour, which was poor (an optimal value is 0.18°F/hour or less). The 'average deviation from setpoint' factor was 0.26°F, with the setpoint temperature being 36.4°F (an optimal value is 0.1°F or less). The 'temperature volatility' factor was only 0.17°F (an optimal value is 0.02°F or less). The 'median cooling amount' factor was 0.29°F (an optimal value is 0.05°F or less), and the maximum cooling amount was 0.44°F (an optimal value is 0.1°F or less). Each of these factors are multiplied by a predetermined weight corresponding to its impact level (low, medium, or high → 10%, 20%, or 25%). The resulting weighted scores are summed to produce a final cooling score-in this example, 714 out of a maximum of 1000-representing fair cooling consistency and thermal regulation. Additionally, supporting estimates such as total cooling run time (e.g., 12.0 hours) and cumulative temperature reduction (e.g., 14.18°F) are computed to provide contextual information regarding the cooling activity within the temperature-controlled room.

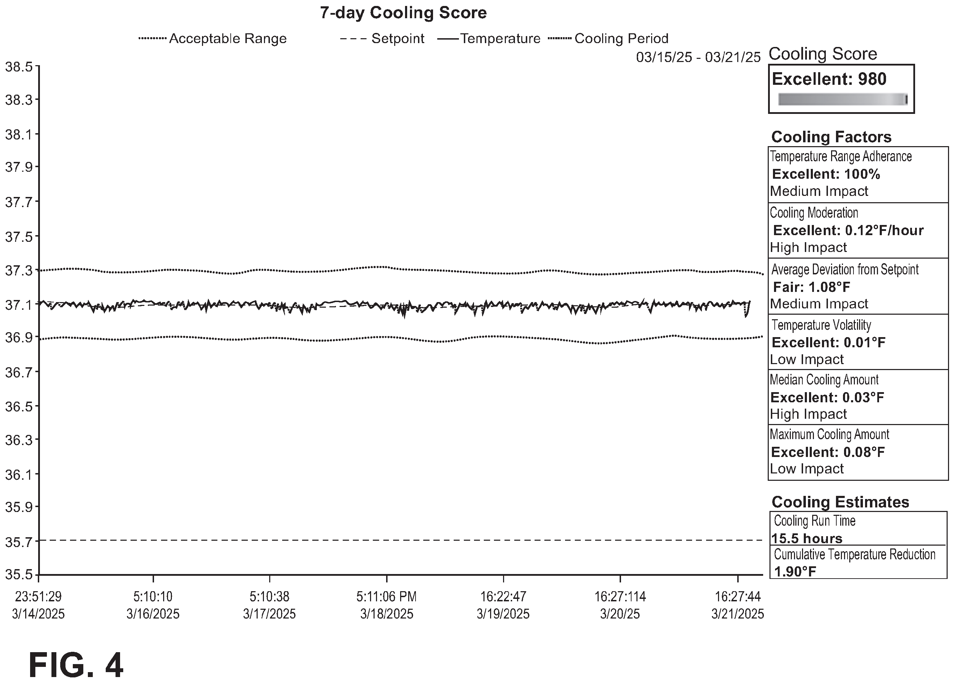

By contrast, an excellent cooling score is shown in Figure 4. In this example, the aggregate cooling score was 980. The aggregate cooling score included the following: (i) a 'temperature range adherence' factor of 100.0%; (ii) a 'cooling moderation factor' of 0.12°F/hour; (iii) an 'average deviation from setpoint' factor of 1.08°F (the setpoint being 36°F in this example); (iv) a 'temperature volatility' factor of 0.01°F; (v) a 'median cooling amount' factor of 0.03°F; and (vi) a 'maximum cooling amount' of 0.08°F. These factors were then normalized and summed to produce the final cooling score of 980, representing excellent thermal regulation. Additionally, supporting estimates such as cooling runtime (e.g., 15.5 hours) and cumulative temperature reduction (e.g., 1.90°F) provide further thermal contextual information regarding the temperature-controlled room.

The remote server 40 is then configured to alert the operator of the temperature-controlled room if the weighted cooling factor score is sufficiently less than a predetermined optimal score (for example 980 in the illustrated embodiments), and the remote server 40 may optionally recommend corrective actions to address significant deviations.

The overall system is interactive during data logging and is configured to send automated notifications-include short messaging service (SMS) notifications, mobile app push notifications, in-app notifications, and email-whenever a change to the thermal environment is recommended. For example, on day seven of storage, if the recommended temperature shifts from 50°F to 38°F, the remote server 40 causes an automated notification to be sent to the operator of the temperature-controlled room. If the recommended change is not implemented, a follow-up notification may be sent the following day to the operator of the temperature-controlled room, and optionally the owner/manager of the temperature-controlled room. These notifications may include recommended actions such as lowering the storage temperature, adjusting the oxygen setpoint, or issuing alerts if carbon dioxide levels exceed acceptable thresholds. This system ensures that operators are promptly informed of required changes to help maintain optimal storage conditions to preserve the quality of the produce under long-term storage in the temperature-controlled room 10.

The system is also configured to generate alerts to minimize unnecessary defrost cycles, which can negatively impact fruit quality. Each defrost cycle introduces heat into the CA room 10, triggering additional cooling cycles that can accelerate moisture loss and increase the risk of the produce shriveling. By limiting the frequency and duration of defrost events through timely alerts and optimized scheduling, the system helps reduce excessive cooling demands and preserves the integrity of the produce under storage. As a result, a greater percentage of produce maintains its marketable condition, leading to improved yields and higher commercial value. Alternatively, the system can generate an alert when defrost cycles are necessary.

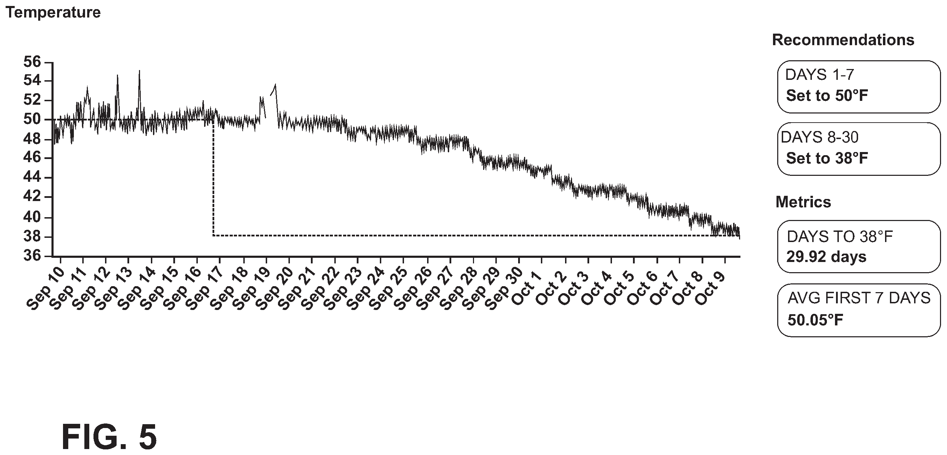

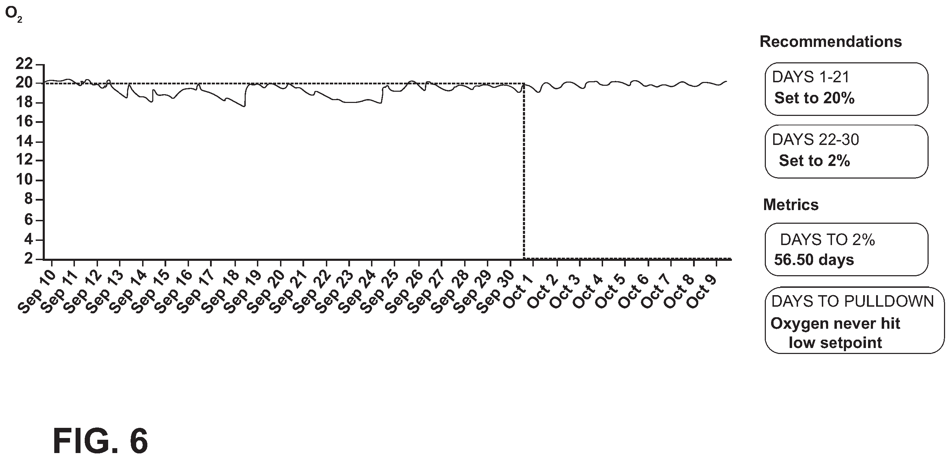

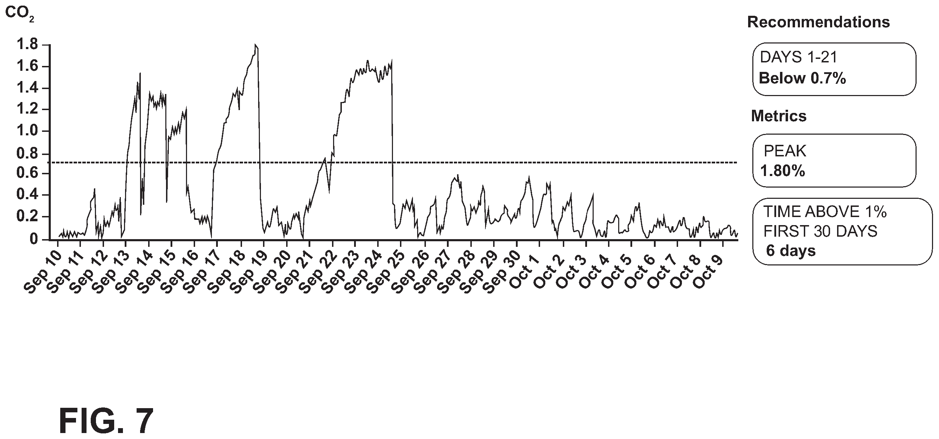

In the following example, the operator of the temperature-controlled room did not adhere to the recommended environmental conditions, causing a significant loss in the marketability of the stored commodities (Honeycrisp apples). Figure 5 is a graph depicting the temperature fluctuations inside the temperature-controlled room (solid line) and the recommended temperature profile (broken line). For the first seven days of storage, the recommended temperature was 50°F, decreasing to 38°F for the remainder of the evaluation period. Some cultivars require a delay in cooling for a period of days. The system will send notifications according to a predefined recipe input from the operator. At that interval, the operator will receive a notification to remind the operator of the next temperature setpoint. Figure 6 is a graph illustrating the change in oxygen concentration over time within the CA room over the same thirty-day evaluation period. For the first twenty days, the recommended oxygen concentration (broken line) was 20%, decreasing to 2% for the remainder of the evaluation period. Similarly, Figure 7 is a graph illustrating the concentration of carbon dioxide over the same thirty-day evaluation period. For the entirety of the evaluation period, the recommended carbon dioxide concentration (broken line) was 0.7%. However, the solid lines for each of Figures 5-7 reveal a marked departure from the recommended environmental conditions, leading to a significant reduction in the marketability of the Honeycrisp apples. One or more embodiments of one or more aspects of the invention may guard against such losses by sending automated notifications for the operator of the temperature-controlled room, while potentially recommending corrective actions. For example, the remote server 40 generates notifications to inform the operator that the monitored fruit is unlikely to achieve optimal long-term storage outcomes. The correction actions can include, for example, lowering the storage temperature and/or adjusting the oxygen setpoint. This notification alerts the operator and/or management of an action which is necessary for optimal fruit marketability.

To reiterate, one or more embodiments of one or more aspects of the invention may determine a weighted cooling factor score based on successive temperature measurements within a temperature-controlled room. The weighted cooling factor score is the aggregate of multiple temperature-based factors, each being assigned a respective weight. By non-limiting example, the temperature-based factors can include temperature range adherence, cooling moderation, average deviation from a setpoint, temperature volatility, median cooling amount, and/or maximum cooling amount. One or more embodiments of one or more aspects of the invention may also generate automated notifications for the operator of the temperature-controlled room and/or management. For example, the automated notifications can inform the operator(s) that the monitored fruit is unlikely to achieve optimal long-term storage outcomes. This early warning enables the operator of the temperature-controlled room and/or management to expedite the marketing or distribution of the stored produce earlier than scheduled, thereby reducing potential losses due to shriveling or fruit shrinkage.

These and other embodiments provide automated reporting and monitoring features, including reports that provide insights into the initial storage conditions of produce, offering both real-time visibility into management performance and historical comparisons to prior years. The system tracks key environmental parameters such as oxygen levels, carbon dioxide levels, and temperature during the early period of post-harvest storage. The system can include interactive tools that monitor storage conditions as produce progresses through the cold chain. The system automatically generates alerts when monitored parameters, such as temperature, oxygen, or carbon dioxide levels, deviate from preset thresholds or require scheduled adjustments (e.g., temperature step-down intervals). These proactive notifications help ensure that operators remain engaged with and responsive to the needs of the stored commodities throughout daily operations.

The system also provides comprehensive post-harvest monitoring and analytics by tracking and evaluating key environmental and operational parameters in temperature-controlled rooms. For example, an initial report can compile critical data from the first thirty days of storage to assess the effectiveness of early-stage handling. Core metrics include respiration rate, which reflects the metabolic activity of the stored produce. The system calculates a cooling score based on the plurality of temperature-based factors, providing insight into the quality of product cooling. It also monitors oxygen pulldown and carbon dioxide history to evaluate how effectively the room atmosphere is modified and maintained. Additional diagnostics include room gastightness (to assess atmospheric containment), scrubber efficiency (for CO₂ and ethylene removal systems), continuous temperature logging, and defrost sensing to ensure optimal refrigeration system performance. Collectively, these features offer actionable intelligence to enhance storage outcomes and reduce quality degradation during the post-harvest period.

The above description is that of current embodiments of the invention. Various alterations and changes can be made without departing from the spirit and broader aspects of the invention. This disclosure is presented for illustrative purposes and should not be interpreted as an exhaustive description of all embodiments of the invention or to limit the scope of the claims to the specific elements illustrated or described in connection with these embodiments. Any reference to elements in the singular, for example, using the articles "a," "an," "the," or "said," is not to be construed as limiting the element to the singular.
The present disclosure extends to the following numbered statements:
S1. A system for evaluating cooling quality and ultimately the contents of a temperature-controlled room, the system comprising:
   a temperature sensor disposed within the temperature-controlled room, the temperature sensor being configured to periodically measure a temperature within the temperature-controlled room over an evaluation period; and
   a communications module configured to transmit temperature data from the temperature sensor to a remote server, the remote server being configured to:
      calculate a weighted cooling factor score based on a plurality of temperature-based factors, each temperature-based factor being derived from the temperature data, and
      generate an automated notification indicating a recommended corrective action to counteract a reduction in marketability of produce within the temperature-controlled room in response to the weighted cooling factor score being less than a predetermined optimal score.
S2. The system of statement 1, further including a sampling enclosure configured to be selectively placed in atmospheric communication with the temperature-controlled room, wherein the temperature sensor is external to the sampling enclosure.
S3. The system of statement 1, wherein the remote server is configured to assign a respective weight to each of the plurality of temperature-based factors.
S4. The system of statement 1, wherein the temperature-based factors include two or more of the following: temperature range adherence, cooling moderation, average deviation from a setpoint, temperature volatility, median cooling amount, and maximum cooling amount.
S5. The system of statement 1, wherein the automated notification is transmitted to an operator or a manager of the temperature-controlled room via a push notification, a short messaging service (SMS) notification, in-app notifications, or an electronic mail message.
S6. The system of statement 1, wherein the optimal score is dynamically adjusted based on a cooling equipment performance within the temperature-controlled room.
S7. The system of statement 1, wherein the remote server offers the operator information to designate the contents of the temperature-controlled room for shipment or further storage based on the weighted cooling factor score.
S8. The system of statement 1, wherein the remote server is further configured to rank a plurality of temperature-controlled rooms based on their respective weighted cooling factor scores.
S9. The system of statement 8, wherein the remote server is further configured to designate the temperature-controlled room having the highest weighted cooling factor score for long-term storage of produce therein.
S10. The system of statement 1, wherein the recommended corrective action includes a recommended temperature within the temperature-controlled room.
S11. The system of statement 1, wherein the evaluation period is at least one day, and wherein the temperature sensor is configured to measure temperature at least once every ten minutes.
S12. A method for evaluating cooling quality and ultimately the quality of the contents of a temperature-controlled room, the method comprising:
   measuring, by a temperature sensor, a temperature within the temperature-controlled room;
   transmitting, by a communications module, temperature data from the temperature sensor to a remote server;
   calculating, by the remote server, a weighted cooling factor score based on a plurality of temperature-based factors, each temperature-based factor being derived from the temperature data;
   comparing, by the remote server, the weighted cooling factor score to a predetermined optimal score; and
   in response to the weighted cooling factor score being less than the predetermined optimal score, generating an automated notification indicating a recommended corrective action to counteract a reduction in the marketability of the contents of the temperature-controlled room.
S13. The method of statement 12, further comprising assigning a respective weight to each of the plurality of temperature-based factors.
S14. The method of statement 12, wherein the temperature-based factors include two or more of the following: temperature range adherence, cooling moderation, average deviation from setpoint, temperature volatility, median cooling amount, and maximum cooling amount.
S15. The method of statement 12, wherein generating the automated notification includes transmitting a push notification, a short messaging service (SMS) notification, in-app notifications, or an electronic mail message.
S16. The method of statement 12, further comprising informing the operator or management of the temperature-controlled room for shipment timing or further storage based on the weighted cooling factor score.
S17. A system for evaluating storage conditions for bulk produce, the system comprising:
   a plurality of temperature-controlled rooms, each of the plurality of temperature-controlled rooms storing bulk produce therein; and
   a control system configured to monitor one or more environmental parameters within each of the plurality of temperature-controlled rooms, the control system including at least one temperature sensor for each of the plurality of temperature-controlled rooms and a remote server, the remote server being configured to:
      cause the at least one temperature sensor to perform a plurality of successive temperature measurements within each of the plurality of temperature-controlled over time;
      determine, for each of the plurality of temperature-controlled rooms, a weighted cooling factor score based on the plurality of successive temperature measurements;
      rank the weighted cooling factor score for each of the plurality of temperature-controlled rooms; and
      provide an operator of the plurality of temperature-controlled rooms with data to select at least one temperature-controlled room from among the plurality of CA rooms for shipment based on the ranking, the selected at least one temperature-controlled room having a lower weighted cooling factor score than non-selected temperature-controlled rooms.
S18. The system of statement 17, wherein the weighted cooling factor score is the aggregate of two or more of the following temperature-based factors: temperature range adherence, cooling moderation, average deviation from setpoint, temperature volatility, median cooling amount, and maximum cooling amount.
S19. The system of statement 18, further comprising assigning a respective weight to each of the two or more temperature-based factors.
S20. The system of statement 17, wherein the remote server is further configured to generate an automated notification to alert an operator of the plurality of temperature-controlled rooms of a detected reduction in the marketability of the bulk produce being stored in the plurality of temperature-controlled rooms.

## Claims

1. A system for evaluating cooling quality and ultimately the contents of a temperature-controlled room, the system comprising:
a temperature sensor disposed within the temperature-controlled room, the temperature sensor being configured to periodically measure a temperature within the temperature-controlled room over an evaluation period; and
a communications module configured to transmit temperature data from the temperature sensor to a remote server, the remote server being configured to:
calculate a weighted cooling factor score based on a plurality of temperature-based factors, each temperature-based factor being derived from the temperature data, and
generate an automated notification indicating a recommended corrective action to counteract a reduction in marketability of produce within the temperature-controlled room in response to the weighted cooling factor score being less than a predetermined optimal score.

2. The system of claim 1, further including a sampling enclosure configured to be selectively placed in atmospheric communication with the temperature-controlled room, wherein the temperature sensor is external to the sampling enclosure.

3. The system of any of the preceding claims, wherein the remote server is configured to assign a respective weight to each of the plurality of temperature-based factors.

4. The system of any of the preceding claims, wherein the temperature-based factors include two or more of the following: temperature range adherence, cooling moderation, average deviation from a setpoint, temperature volatility, median cooling amount, and maximum cooling amount.

5. The system of any of the preceding claims, wherein the automated notification is transmitted to an operator or a manager of the temperature-controlled room via a push notification, a short messaging service (SMS) notification, in-app notifications, or an electronic mail message.

6. The system of any of the preceding claims, wherein the optimal score is dynamically adjusted based on a cooling equipment performance within the temperature-controlled room.

7. The system of any of the preceding claims, wherein the remote server offers the operator information to designate the contents of the temperature-controlled room for shipment or further storage based on the weighted cooling factor score.

8. The system of any of the preceding claims, wherein the remote server is further configured to rank a plurality of temperature-controlled rooms based on their respective weighted cooling factor scores, optionally wherein
the remote server is further configured to designate the temperature-controlled room having the highest weighted cooling factor score for long-term storage of produce therein.

9. The system of any of the preceding claims, wherein the recommended corrective action includes a recommended temperature within the temperature-controlled room.

10. The system of any of the preceding claims, wherein the evaluation period is at least one day, and wherein the temperature sensor is configured to measure temperature at least once every ten minutes.

11. A method for evaluating cooling quality and ultimately the quality of the contents of a temperature-controlled room, the method comprising:
measuring, by a temperature sensor, a temperature within the temperature-controlled room;
transmitting, by a communications module, temperature data from the temperature sensor to a remote server;
calculating, by the remote server, a weighted cooling factor score based on a plurality of temperature-based factors, each temperature-based factor being derived from the temperature data;
comparing, by the remote server, the weighted cooling factor score to a predetermined optimal score; and
in response to the weighted cooling factor score being less than the predetermined optimal score, generating an automated notification indicating a recommended corrective action to counteract a reduction in the marketability of the contents of the temperature-controlled room.

12. A system for evaluating storage conditions for bulk produce, the system comprising:
a plurality of temperature-controlled rooms, each of the plurality of temperature-controlled rooms storing bulk produce therein; and
a control system configured to monitor one or more environmental parameters within each of the plurality of temperature-controlled rooms, the control system including at least one temperature sensor for each of the plurality of temperature-controlled rooms and a remote server, the remote server being configured to:
cause the at least one temperature sensor to perform a plurality of successive temperature measurements within each of the plurality of temperature-controlled over time;
determine, for each of the plurality of temperature-controlled rooms, a weighted cooling factor score based on the plurality of successive temperature measurements;
rank the weighted cooling factor score for each of the plurality of temperature-controlled rooms; and
provide an operator of the plurality of temperature-controlled rooms with data to select at least one temperature-controlled room from among the plurality of CA rooms for shipment based on the ranking, the selected at least one temperature-controlled room having a lower weighted cooling factor score than non-selected temperature-controlled rooms.

13. The system of claim 12, wherein the weighted cooling factor score is the aggregate of two or more of the following temperature-based factors: temperature range adherence, cooling moderation, average deviation from setpoint, temperature volatility, median cooling amount, and maximum cooling amount, optionally further comprising assigning a respective weight to each of the two or more temperature-based factors.

14. The system of claim 12 or claim 13, wherein the remote server is further configured to generate an automated notification to alert an operator of the plurality of temperature-controlled rooms of a detected reduction in the marketability of the bulk produce being stored in the plurality of temperature-controlled rooms.
